**Europäisches Patentamt**

**European Patent Office**

**Office européen des brevets**

(19)

(11) Veröffentlichungsnummer: **0 054 838**

**B1**

(12) # EUROPÄISCHE PATENTSCHRIFT

(45) Veröffentlichungstag der Patentschrift:
**01.07.87**

(51) Int. Cl.⁴: **B 23 B 29/034**

(21) Anmeldenummer: **81110270.6**

(22) Anmeldetag: **09.12.81**

(54) Plan- und Ausdrehkopf, sowie Werkzeugmaschine zur Aufnahme dieses Werkzeuges.

(30) Priorität: **23.12.80 IT 2689280**

(43) Veröffentlichungstag der Anmeldung:
**30.06.82 Patentblatt 82/26**

(45) Bekanntmachung des Hinweises auf die Patenterteilung:
**01.07.87 Patentblatt 87/27**

(84) Benannte Vertragsstaaten:
**AT CH DE FR GB LI SE**

(56) Entgegenhaltungen:
**DE-A-2 910 918**
**DE-B-1 777 296**
**GB-A-2 074 909**
**SU-A-601 083**

**Werkstatt und Betrieb vol. 112, No. 9 1979, S. 611-614**
**Soviet Inventions Illustrated, Week B08, 4 April 1979, Section P54**

(73) Patentinhaber: **D'Andrea S.p.A., Corso Europa 18, I-20020 Lainate (IT)**

(72) Erfinder: **d'Andrea, Nicola, Piazza Unità Italia, Saronno (IT)**
Erfinder: **d'Andrea, Ermanno, Piazza Unità Italia, Saronno (IT)**
Erfinder: **Castellini, Adriano, Via S. Paolino 38, Milano (IT)**
Erfinder: **Medea, Ferdinando, Via Campi 2, Saronno (IT)**

(74) Vertreter: **Mayer, Hans Benno, Via dell'Orso 7/A, I-20121 Milano (IT)**

EP 0 054 838 B1

LIBER, STOCKHOLM 1987

## Beschreibung

Die vorstehende Erfindung betrifft einen Plan- und Ausdrehkopf, sowie eine Werkzeugmaschine zur Aufnahme dieses Werkzeuges. Aus dem Stand der Technik ist es bekannt, herkömmliche Fräsmaschinen und Bohrwerke mit an sich bekannten Plan- und Ausdrehköpfen zu bestücken, wobei diese Vorrichtungen mit geeigneten Werkzeugen ausgerüstet sind, um somit Bohr- und Ausdreharbeiten, Plandrehen, Gewindeschneiden, sowie andere spanabhebende Bearbeitungsvorgänge durchführen zu können. Die bekannten Plan- und Ausdrehköpfe weisen am Gehäuse ein Handrad auf, dem ein Nonius zugeordnet ist und, unter Zuhilfenahme dieses Handrades, sowie bekannter Bauteile im Inneren der Vorrichtung, ist es möglich, das Werkzeug gegenüber der Achse des Kegelzapfens oder der Werkzeugaufnahmewelle der Werkzeugmaschine zu verschieben.

Diese bekannten Plan- und Ausdrehköpfe erfordern also stets den Eingriff der Bedienungsperson für jegliche Einstellung der Werkzeuglage, sowie für jede Veränderung des Werkzeuges in radialer Richtung.

Es ist weiter ein Plan- und Ausdrehkopf bekannt geworden, der im Inneren eines Gehäuses einen Antriebsmotor, meist einen Gleichstrommotor aufweist, der über NC-Einrichtungen steuerbar ist, um somit automatisch und im gewünschten Masse eine Radialverschiebung des Werkzeuges gegenüber der Spindelachse der Werkzeugmaschine vorzunehmen.

Ein Nachteil dieses bekannten Plan- und Ausdrehkopfes, der zwar elektronisch steuerbar ist, ist in seinen erheblichen Abmessungen und seinem beträglichen Gewicht zu sehen. Weiterhin ist es bei diesem Kopf erforderlich, elektrische Verbindungskabel vorzusehen, wobei die Kabel für die Zuführung elektrischer Energie, sowie die Kabel fuer die Zuführung von Steuerimpulsen stets mit dem Gleichstrommotor und den Steuereinrichtungen verbunden sein müssen.

In letzter Zeit haben sich auf dem Werkzeugmaschinenmarkt immer mehr Bearbeitungszentren (machining centers) für die spanabhebende Bearbeitung und zur Durchführung einer Vielzahl von Bearbeitungsvergängen am Werkstück, durchgesetzt.

Diese Maschinen verwenden eine Vielzahl unterschiedlicher Werkzeuge, die für die einzelnen Bearbeitungsvorgänge am geeignetsten sind, und diese Werkzeuge sind in einem Werkzeugaufnahmemagazin, das als Scheibenmagazin oder als Kettenmagazin ausgebildet ist, untergebracht.

Aus diesem Magazin werden die Werkzeuge automatisch durch Greifer entnommen, um in die Werkzeugspindel der Werkzeugmaschine eingesetzt zu werden, um im Anschluss die gewünschte Bearbeitung am Werkstück durchzuführen. Nach Beendigung des auszuführenden Bearbeitungsvorganges, wird das Werkzeug automatisch aus der Werkzeugspindel der Maschine entnommen, um durch ein anders ausgebildetes Werkzeug, das ebenfalls aus dem Werkzeugmagazin entnommen wurde, ersetzt zu werden.

Bis heute war es in diesen Werkzeugmagazinen, die den sogenannten Bearbeitungszentren oder "machining centers" zugeordnet waren, nicht möglich, Plan- und Ausdrehköpfe mit praxisnahem Aufwand zu verwenden, da das erhebliche Gewicht der Vorrichtung eine Aufnahme in einem Werkzeugmagazin nicht zuliess, Aus diesem Grund konnten sich herkömmiche Plan- und Ausdrehköpfe in Bearbeitungszentren nicht durchsetzen, da die Einstellung und Zustellung des Werkzeuges gegenüber dem zu bearbeitenden Werkstück in diesen Maschinen meist unter Zuhilfenahme von NC-Einrichtungen erfolgt.

Auch die zweite, vorher genannte Ausführungsform eines Plan- und Ausdrehkopfes kann in Bearbeitungszentren für die Metallbearbeitung, die mit einem Magazin zum Wechseln der Werkzeuge ausgerüstet ist, nicht eingesetzt werden, da diese Plan- und Ausdrehköpfe, die zwar numerisch steuerbar sind, nicht nur zu platzaufwendig und zu schwer sind, sondern weil diese Geräte nicht mit einem herkömmlichen Verbindungskonus, der in die Werkzeugspindel der Werkzeugmaschine einsetzbar ist, ausgerüstet sind. Ferner benötigen diese bekannten Plan- und Ausdrehköpfe stets elektrische Verbindungskabel, um dem Gleichstrommotor die notwendige elektrische Energie zuzuführen, sowie die Übertragung von Steuersignalen, beispielsweise durch eine NC-Einrichtung, zu ermöglichen.

Es ist einleuchtend, dass das Vorhandensein dieser Verbindungskabel eine Verwendung dieses Plan- und Ausdrehkopfes in einem Werkzeugwechselmagazin nicht gestattet. Aus diesem Grunde, trotz der erheblichen Vorteile, die der Einsatz von Plan- und Ausdrehköpfen bietet, werden auch noch heute in Bearbeitungszentren oder sogenannten "machining centers", die mit einem Werkzeugwechselmagazin ausgerüstet sind, stets herkömmliche, feste Bearbeitungswerkzeuge verwendet, die in ihrer Ausbildung und Form den spezifischen Bearbeitungsvorgängen angepasst sind, um z. B. konische Bohrungen oder Planfräsungen, sowie Einstiche und Anfasarbeiten durchzuführen. In diesen bekannten Maschinen ist es häufig erforderlich, zur Durchfuehrung von Anfasarbeiten, sowohl den Werkstückaufnahmetisch als auch den gesamten Werkzeugkopf der Maschine zu bewegen. Diese Tatsache führt nicht nur zu einem grösseren Verschleiss der Führungsbahnen der Maschinen, sondern die Ausführung der Anfas- und Planfräsarbeiten erfolgt nicht mit der gewuenschten Genauigkeit und den erforderlichen Tolleranzen. Mit den bekannten, in Bearbeitungszentren verwendeten Werkzeugen, ist es häufig nicht möglich, spanabhebende Bearbeitungen mit Hinterschneidungen durchzuführen. Ferner können in diesem Falle keine Gewinde geschnitten werden, konische Bohrungen, sowie gewölbte oder anders geformte Ausdrehungen ausgeführt werden.

Aus der Druckschrift "Werkstatt und Betrieb" Vol. 112, No. 9, 1979 Seiten 611 - 614 "Fertigungsmöglichkeiten CNC-gesteuerte Planschieber auf Bohrwerken" ist ein Planschieberkopf bekannt geworden, der mit der Werkzeugspindel eines Bohr- und Fräswerkes in Wirkverbindung bringbar ist, um im Anschluss daran die für einen Bohr- und Ausdrehkopf üblichen Bearbeitungen durchführen zu können. Dieser bekannte Planschieberkopf ist aber nicht geeignet, in einem Werkzeugmagazin eines Bearbeitungszentrums gelagert zu werden und bei Bedarf aus diesem entnommen und mit der Werkzeugspindel zur Durchführung automatischer Bearbeitungsvorgänge in Wirkverbindung gebracht zu werden. Aus der Vorveröffentlichung SU-A-601.083 ist ein Bohrkopf bekannt geworden, der zwar eine automatische Einstellung auf einen gewissen Bohrungsdurchmesser ermöglicht, jedoch nicht erlaubt, kontinuierlich mittels einer, über eine NC-Einrichtung gesteuerten Antriebsvorrichtung, ein beliebiges Verfahren des Werkzeugschlittens während der Drehbewegung des Werkzeuges vorzunehmen.

Aufgabe der vorstehenden Erfindung ist es, die Nachteile des Standes der Technik zu vermeiden, und einen neuen Plan- und Ausdrehkopf vorzuschlagen, der in einer Werkzeugemaschine, hauptsächlich in einem Bearbeitungszentrum, das mit einem Werkzeugwechselmagazin zur automatischen Auswechslung der Werkzeuge versehen ist, verwendbar ist, wobei bei dem erfindungsgemässen Plan- und Ausdrehkopf das Einstellen und Verstellen des Werkzeuges über numerisch gesteuerte Einrichtunfen erfolgt, ohne dass bei Verwendung des Kopfes, ein Eingriff der Bedienungsperson erforderlich wäre, und ohne dass der Plan- und Ausdrehkopf mit elektrischen Verbindungskabel für die Zuführung der elektrischen Energie, sowie der Steuersignale ausgerüstet ist.

Eine weitere Aufgabe der vorstehenden Erfindung ist darin zu sehen, eine Werkzeugmaschine vorzuschlagen, die ohne grossen Aufwand mit dem erfindungssgemässen Plan- und Ausdrehkopf ausgerüstet werden kann.

Die erfindungsgemässen Aufgaben und werden durch den Plan- und Ausdrehkopf nach Anspruch 1 bzw die Werkzeugmaschine nach Anspruch 2 gelöst.

Weitere bevorzugte Merkmale der Erfindung können der nun folgenden Beschreibung, den Unteransprüchen, sowie den beigefügten Zeichnungen entnommen werden.

Die erfindungsgemässe Einrichtung wird nun anhand eines Ausführungsbeispieles genauer beschrieben und in den Zeichnungen dargestellt.

Fig. 1 zeigt schematisch den erfindungsgemässen Plan- und Ausdrehkopf im Schnitt entlang der Line 1-1 der Fig. 2;

Fig. 2 zeigt den Plan- und Ausdrehkopf in einer Ansicht, sowie teilweise in Schnitt, entlang der Linie II-II der Fig. 1;

Fig. 3 zeigt schematisch die Bauteile zur Radialverschiebung des Werkzeuges;

Fig. 4 zeigt schematisch die elektrischen und elektronischen sowie mechanischen Bauteile, zur Durchführung sowie zur Steuerung der Bewegungen und zur Einstellung des Werkzeuges des erfindungsgemässen Plan- und Ausdrehkopfes.

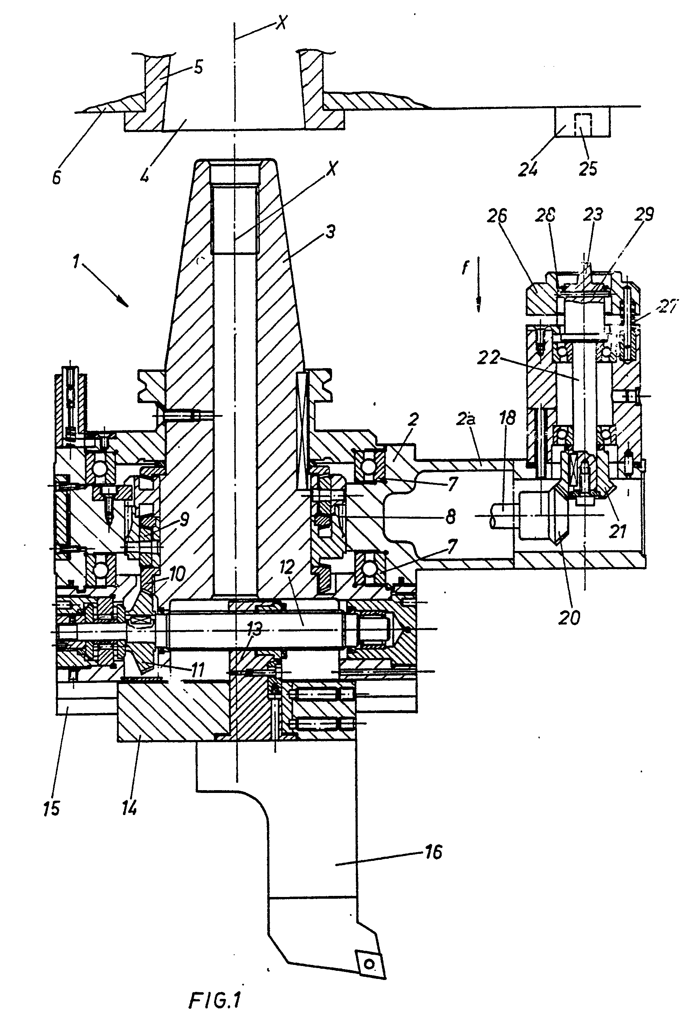

Wie der Fig. 1 zu entnehmen ist, besteht der gesamthaft mit 1 bezeichnete Plan- und Ausdrehkopf aus einem Gehäuse 2, von dem ein bekannter Kegelzapfen 3 absteht, der in die konische Aufnahmebohrung 4 einer Werkzeugspindel 5 der Werkzeugmaschine 6 einführbar ist. Unter Zuhilfenahme von Kugellagern 7, ist der Kegelzapfen 3 drehbar und in bekannter Weise im Gehäuse 2 des Kopfes 1 gelagert.

Im Inneren des Gehäuses 2, ist ferner ein Zahnkranz 8 gelagert, der den Kegelzapfen 3 umgibt. Der Zahnkranz 8 steht mit einem Zahnrad 9 in Wirkverbindung, und dieses Zahnrad 9 steht über einen weiteren Zahnkranz 10 in Wirkverbindung mit einem Kegelrad 11, das fest mit einer Gewindespindel 12 verbunden ist, die unter Zwischenschaltung einer Mutter 13 mit dem Werkzeugaufnahmeschlitten 14 in Wirkbverbindung steht. Der Schlitten 14 ist in radialer Richtung gegenüber der Achse X des Kegelzapfens 3, entlang einer Schwalbenschwanzführung 15, die auf der Unterseite des Plan- und Ausdrehkopfes 1 vorgesehen ist, verschiebbar. Dieser Schlitten 14 dient zur Aufnahme eines Werkzeuges 16. Es sei an dieser Stelle betont, dass die mechanischen Bauteile 7 - 16 allgemein aus dem nächstkommenden Stand der Technik (DE-C- 1 652 658) bekannt sind, und aus diesem Grund, wird auf eine genauere Beschreibung dieser Bauteile hier verzichtet.

In einer seitlichen, birnenförmigen Verlängerung 2a des Gehäuses 2 ist, unter Zuhilfenahme von Wälzlagern 17, eine drehbare, horizontal angeordnete Welle 18 gelagert, die auf ihrer, dem Zahnkranz 8 zugewandten Seite ein Schneckengewinde 19 aufweist, das mit den Zähnen des Zahnkranzes 8 in Wirkverbindung steht. Auf der dem Gewinde 19 gegenüberliegenden Seite der Welle 18, ist ein Kegelzahnrad 20 befestigt, das mit einem weiteren Kegelrad 21 kämmt, das mit einer senkrecht angeordneten Welle 22 verbunden ist, die an ihrem freien Ende eine Verbindungszunge 23 aufweist, die von der vertikalen Welle 22 absteht.

Wird der Kegelzapfen 3 mit seiner Achse X, in Übereinstimmung mit der Ache X der Werkzeugaufnahmebohrung 4 der Spindel 5 der Werkzeugmaschine 6 ausgerichtet, so befindet sich die Verbindungszunge 23 in Übereinstimmung mit einer verdrehbaren Hülse 24, die einen Schlitz 25 aufweist, der zur Aufnahme der vorstehenden Zunge 23 der Antriebswelle 22 dient. Somit kann zwischen diesen Teilen eine formschlüssige Verbindung hergestellt werden. An seiner Oberseite wird die Welle 22 von einem Ring 26 umgeben, und dieser Ring ist in Axialrichtung der Welle 22, gegen die Wirkung einer Feder 27 verschiebbar. Im Inneren weist der Ring Vorsprünge 28 auf, die sich diametral gegenüberstehen, und mit diesen Vorsprüngen kann ein Querstift 29 in Wirkverbindung treten, der am oberen Ende der Welle 22 angeordnet ist. Mit der beschriebenen Vorrichtung wird erreicht, dass bei Ruhestellung der Vorrichtung, die vorspringende Verbindungszunge 23 stets gegenüber der Nut 25 der Antriebshülse 24, der Werkzeugmaschine 6, zu liegen kommt.

Somit wird in vorteilhafter Weise vermieden, dass dadurch ungewollte oder nichtberechtigte Betätigung der Welle 22, in Ruhestellung derselben, dieser eine Drehbewegung verliehen wird, die dazu führen würde, dass keine automatische Verbindung zwischen der vorspringenden Zunge 23 und der Nut 25 während des Einführens des Kegelzapfens 3 in die Werkzeugspindel 5 gewährleistet werden könnte.

Die beszchriebenen Positionier- und Haltemittel der vorspringenden Zunge 23, die in Fig. 1 mit 26, 27, 28 und 29 bezeichnet sind, werden hingegen unwirksam, wenn der Kegelzapfen 23 in die Bohrung 4 eingeführt wird, und wenn dabei die Hülse 26 bei Anlage an der Vorderwand der Werkzeugmaschine 6, in Richtung des Pfeiles f zurückgedrückt wird, wodurch erzielt wird, dass in dieser Stellung, ein Auseinanderrücken zwischen Querstift 29 und den radialen Vorspruengen 28 erfolgt, und dadurch eine freie und nicht begrenzte Drehbewegung der Welle 22 ermöglicht wird.

Es ist leicht zu verstehen, dass durch die Verdrehung der Welle 22, sowie durch die Drehbewegung der Welle 18, über den Zahnkranz 8, das Zahnrad 9, sowie den Zahnkranz 10 und das Zahnrad 11, der Gewindewelle 12 eine Drehbewegung verliehen werden kann, wobei diese Drehbewegung über die Spindel 13 und den Schlitten 14 eine Verschiebung des Werkzeuges 16 entlang der Schwalbenschwanzführung 15 bewerkstelligt.

Während bei der in Fig. 1 dargestellten Ausführungsform die Bewegung an die Welle 22 direkt über eine Verbindungshülse 25, die durch Einrichtungen im Inneren der Werkzeugmaschine 6 angetrieben wird erfolgt, ist es auch denkbar, daß der Verstellantrieb zur Durchführung der Radialverschiebung über einen Drehantrieb eines Industrieroboters oder Manipulators erfolgen könnte, wobei auch in diesem Fall die Drehbewegung über eine NC-Einrichtung gesteuert werden könnte.

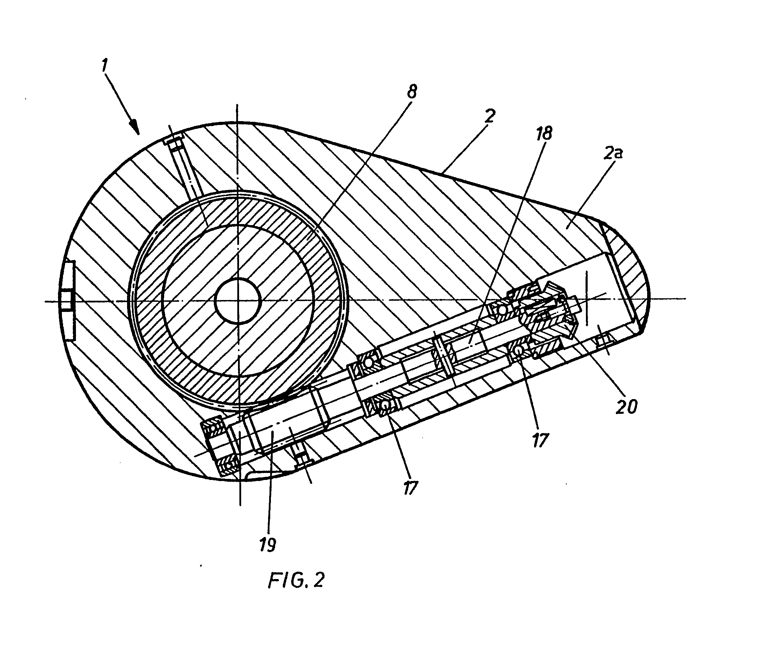

Aus der Fig. 2 kann entnommen werden, dass im Plan- und Ausdrehkopf die Welle 18 geneigt gegenüber der Längsachse des Plan- und Ausdrehkopfes 1 vorgesehen ist. Durch diese Tatsache wird eine besonders kompakte, gedrungene, birnenförmige Ausgestaltung des Gehäuses des erfindungsgemässen Plan- und Ausdrehkopfes möglich, eine Form, die besonders günstig in der Handhabung ist, und gerade bei automatischen Werkzeugmagazinen eine einfache Einführung in das Magazin, sowie ein einfaches Einführen und Ausrichten in der Maschine erlaubt, ohne von besonders unhandlichen Abmessungen gestört zu werden.

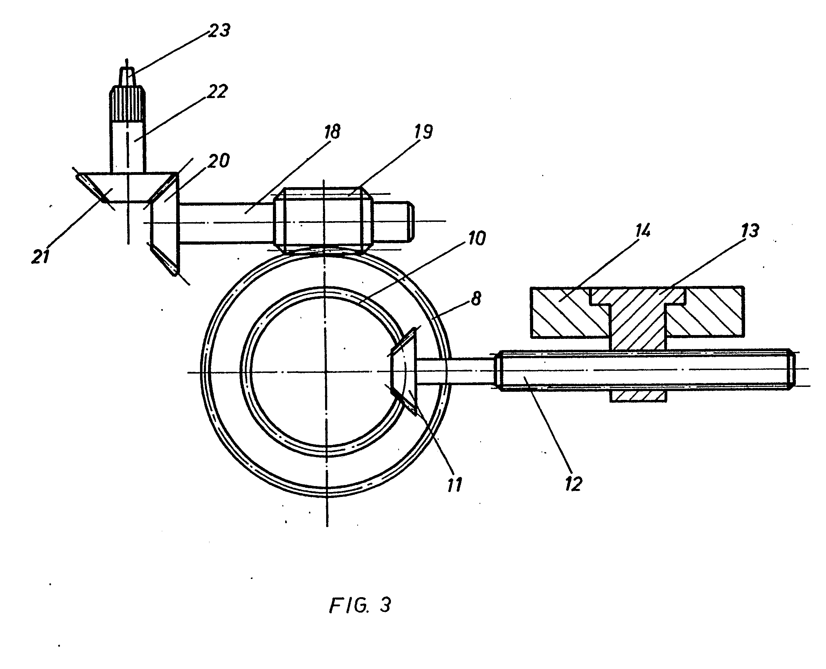

In Fig. 3 ist schematisch die kinematische Verkettung der wesentlichen Bauteile des erfindungsgemässen Plan- und Ausdrehkopfes dargestellt. Man kann die Verbindungszunge 23 erkennen, die vom freien Ende der Welle absteht, wobei die Welle 22 über ein Kegelzahnrad 21 wirkverbunden mit dem Kegelzahnrad 20 der Antriebswelle 18 ist, die wiederum über ein Endlosgewinde 19 mit den Zähnen des Zahnkranzes 8 in Verbindung steht. Der Zahnkranz 8 ist über das Zahnrad 9 (nicht dargestellt in Fig. 3) wirkverbunden mit einem weiteren Zahnkranz 10, der mit einem Kegelzahnrad 11 in Verbindung steht, das fest mit der Gewindespindel 12 verbunden ist, die die Spindel 13 des Werkzeugaufnahmeschlittens 14 antreibt.

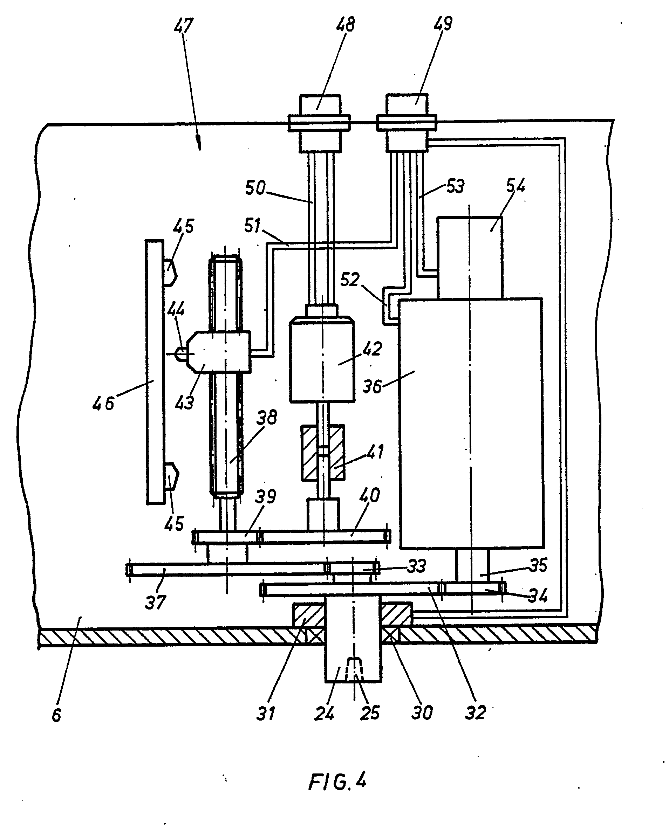

Aus der Fig. 4 können schematisch jene Bauteile entnommen werden, mit denen der in der Vorderwand der Werkzeugmaschine 6 gelagerten Aufnahme 24 die notwendige, gesteuerte Drehbewegung verliehen werden kann.

In vorteilhafter Weise ist die Hülse 24 drehbar unter Verwendung von Wälzlagern 30 in der Vorderwand einer Werkzeugmaschine 6, in unmittelbarer Nähe der Werkzeugspindel 5 und achsparallel zur Achse X der Werkzeugspindel 5 angeordnet. Die Werkzeugspindel 5 weist eine Bohrung zur Aufnahme des Kegelzapfens 3 des Plan- und Ausdrehkopfes auf. Um die Hülse 24 stets in der gewünschten Stellung blockieren zu können, d.h. mit der Verbindungsnut 25 in Ausrichtung zur Kupplungszunge 23 der Welle 22, ist vorgesehen, dass der Hülse 24 ein Haltemittel, in vorteilhafter Weise in Form einer elektomagnetischen Bremse 31 oder ein ähnliches steuerbares Bremsmittel, zugeordnet ist. Am Ende der Hülse 24, die der Kupplungsnut 25 entgegengesetzt ist, ist ein erstes Zahnrad 32, sowie ein zweites Zahnrad 33 vorgesehen. Das Zahnrad 32 steht mit einem Zahnrad 34 in Wirkverbindung und dieses Zahnrad 34 ist fest mit einer Welle 35 eines Gleichstrommotores 36 verbunden. Das Zahnrad 33 der Hülse 24 ist hingegen wirkverbunden mit einem Zahnrad 37, das an einer Gewindespindel 38 befestigt ist. Ferner ist die Gewindespindel 38 an einem weiteren Zahnrad 40 befestigt, welches seinerseits unter Zwischenschaltung eines Kupplungsstückes 41 mit einem Resolver 42 oder einem anders ausgebildeten Transduktor in Verbindung steht. Diese Einrichtungen sind aus dem Stand der Technik bekannt und allgemein gebräuchlich bei der numerischen Steuerung von Maschinen.

Mit der Gewindespindel 38, steht eine Gewindemutter 43 in Wirkverbindung, die ein Innengewinde aufweist, und von dieser Mutter 43, steht ein Betätigungszapfen 44 ab, der Bestandteil eines elektrischen Schalters oder Unterbrechers ist. Dieser Betätigungszapfen 44, kann von Endnocken 45 betätigt werden, die einstellbar auf einer Halteleiste 46 angeordnet sind. Die Bauteile 31 - 46 sind in vorteilhafter Weise als Einbaueinheit zusammengefasst und in einem Einbaugehäuse, das gesamthaft mit 47 gekennzeichnet ist, untergebracht. Das gesamte Gehäuse 47 kann z. B. im Inneren des Maschinenkopfes der Werkzeugmaschine 6, der die Werkzeugspindel aufnimmt, befestigt sein. Der Stecker 48 steht über elektrische Leitungen 50 mit dem Eingang des Resolvers oder Encoders 42 in Verbindung, und im Stecker 49, enden die elektrischen Leitungen 51, die vom Endschalter 44 kommen. Ferner enden im Stecker 49 die elektrischen Leitungen 52 für die Stromversorgung zum Motor 36, sowie die Leitungen 53, die mit einem Tachogenerator 54 in Verbindung stehen, der mit dem Gleichstrommotor 36 wirkverbunden ist. Mit den Steckern 48 und 49 wird eine übliche NC-Einrichtung, zum Zuführen elektrischen Stroms, sowie zum Empfangen und Aussenden von Steuer- und Kontrollsignalen verbunden.

Die Arbeitsweise des erfindgsgemässen Plan- und Ausdrehkopfes ist folgende:

Unter Verwendung bekannter Einrichtungen wird der Plan- und Ausdrehkopf 1 aus dem Werkzeugmagazin (nicht dargestellt) entnommen, um mit seinem Kegelzapfen 3 in die Aufnahme 4 der Werkzeugspindel 5 eingesetzt zu werden. Unter Verwendung bekannter Spannmittel, wird der Kegelzapfen 3 des Plan- und Ausdrehkopfes 1 automatisch in der Spindel der Werkzeugmaschine verspannt. Während der Einführbewegung des Kegelzapfens 3 in die Bohrung 4 der Werkzeugspindel 5, wird auch die Mitnehmerzunge 23 mit der Antriebsnut 25 der Antriebshülse 24, die in der Wand der Werkzeugmaschine 6 gelagert ist, in Wirkverbindung gebracht.

Es ist zu berücksichtigen, dass das Werkzeug 16 des Plan- und Ausdrehkopfes 1 vor Einbringung in des Werkzeugmagazin in der Werkzeugschärferei oder der Werkzeugausgabe bereits auf einen bestimmten Bezugspunk, der allen verwendeten Werkzeugen gemein ist, eingestellt wurde (presetting). Somit befindet sich, nach Einsetzens des erfindungsgemässen Plan- und Ausdrehkopfes 1 in die Werkzeugmaschine, die Schneide des Werkzeuges genau in Übereinstimmung mit dem genannten Bezugspunkt.

Zur Durchführung einer Verschiebung des Werkzeuges 16 wird dem Schlitten 14 eine Radialbewegung entlang der Schwalbenschwanzführung 15 übertragen. Diese Bewegung erfolgt über die Gewindespindel 12, das Zahnrad 11, den Zahnkranz 10, das Zahnrad 9 und das Zahnrad 8, das mit dem Endlosgewinde 19 der Welle 18 in Wirkverbindung steht, sowie über das Kegelrad 20 und 21 und über die Antriebszunge 23, die mit der Antriebsnut 25 der Antriebshülse 24 in Wirkverbindung steht.

Wie der Fig. 4 zu entnehmen ist, wird die drehbare Hülse 24 über die Zahnräder 32 und 34 angetrieben; diese Zahnräder werden ihrerseits durch den Gleichstrommotor 36 in Drehbewegung versetzt.

Durch Vorsehung des Tachogenerators 54, ist es möglich, die durchgeführten Umdrehungen des Motores festzustellen und zu speichern, wodurch über die zentrale Steuereinheit der NC-Einrichtung, entsprechende Kontroll- und Steuerimpulse abgegeben werden können.

Über den Resolver oder Encoder 42 kann jederzeit die genaue Stellung der Werkzeuges 16 gegenüber dem bereits genannten Bezugspunkt, der während der Werkstückeinstellung (presetting) festgelegt wurde, festgestellt werden.

Aus Sicherheitsgründen ist auf der Gewindespindel 38 eine Gewindemutter 43 angeordnet, die in Längsrichtung verschiebbar ist, und den Betätigungszapfen 44 eines elektrischen Schalters aufweist. Der Betätigungszapfen 44 des Schalters kann durch Endnocken 45, die einstellbar vorgesehen sind, und den maximalen Verstellweg der Mutter 43 und somit auch des Werkzeuges 16 festlegen, begrenzet werden.

Über die beiden Stecker 48, 49 werden die Antriebs-, Kontroll - und Steuermittel 36, 54, 42, 43, 44 untereinander wirkverbunden, sowie mit der Zentraleinheit einer bekannten NC-Einrichtung in Wirkverbindung gebracht. Die für Werkzeugmaschinen bekannte NC-Einrichtung verarbeitet die vom Tachogenerator 54, vom Resolver oder Encoder 42, sowie, vom Schalter 44 abgegebenen Steuersignale und Impulse und gibt entsprechende Steuerimpulse an den Gleichstrommotor 36 ab, um somit das Werkzeug 16 anzutreiben und in der gewünschten Weise, entsprechend vorbestimmten Bearbeitungsprogrammen zu verschieben oder anzuhalten.

**Patentansprüche**

1. Plan- und Ausdrehkopf mit einem Kopfgehäuse (2), einem mit der Spindel (5, 6) einer Werkzeugmaschine (6) verbindbaren Aufnahmekonus (3) einem ein Teilstück des Kopfgehäuses bildenden Element (2a), das mit einer parallel zur Achse (X) des Aufnahmekonus angeordneten, drehbar gelagerten Welle (22) versehen ist, die mit einer steuerbaren Verstelleinrichtung (24, 25, 47) der Werkzeugmaschine zur Radialverschiebung eines Werkzeuges (16) wirkverbindbar ist, dadurch gekennzeichnet, dass das Element (2a) eine seitliche Verlängerung des Kopfgehäuses darstellt, und die Welle (22) über zwei Kegelräder (20, 21), eine Antriebswelle (18), ein Schneckenrad (19), und ein ansich bekanntes Antriebsdifferenzial (8-12) mit dem Werkzeug derart in Wirkverbindung steht, dass der Antrieb zur Radialverschiebung des Werkzeuges unabhängig von dem Spindelantrieb erfolgt.

2. Werkzeugmaschine mit einem Vokzeugwechsler und einem Werkzeugwechselmagazin zur Aufnahme und zum Antrieb des Plan- und Ausdrehkopfes nach Patentanspruch 1, wobei in der Wand (6), die die Spindel (4, 5) aufnimmt, ein Abtriebselemant (24, 25) der Verstelleinrichtung (47) gelagert ist, das mit dem freien Ende (23) eines Antriebselementes (23, 26) des Plan- und Ausdrehkopfes (1) verbindbar ist.

3. Plan- und Ausdrehkopf, nach Patentanspruch 1, dadurch gekennzeichnet, dass in der seitlichen Verlängerung (2a) des Kopfgehäuses (2) die Antriebswelle (18) horizontal angeordnet ist, und dass diese Antriebswelle (18) an ihrem freien Ende über dei Kegelräder (20, 21) mit ser Welle (22) in Wirkverbindungen steht, wobei die Welle (22) in einer vom Kopfgehäuse (2a) abstehenden Aufnahme (26) angeordnet ist.

4. Plan- und Ausdrehkopf, nach Patentanspruch 3, dadurch gekennzeichnet, dass die Welle (22) vertical angeordnet ist und an ihrem freien Ende eine Kupplungszunge (23) aufweist.

5. Plan- und Ausdrehkopf, nach Patentanspruch 4, dadurch gekennzeichnet, dass die Kupplungszunge (23) über eine formschlüssige Verbindung mit einer entsprechenden Nut (25) einer Drehhülse (24) der Verstelleinrichtung verbindbar ist.

6. Plan- und Ausdrehkopf, nach Patentanspruch 5, dadurch gekennzeichnet, dass das mit der Kupplungszunge (23) versehene Ende der Welle (22) von einem drehfest angeordneten Ring (26) umgeben ist, der in Axialrichtung gegen die Wirkung eines Federmittels (27) verschiebbar ist, dass dieser Ring (26) sich diametral gegenüberliegende Vorsprünge (28) aufweist, mit denen in Ruhelage des Plan- und Ausdrehkopfes (1) ein Querstift (29) in Wirkverbindung steht, der fest mit dem freien Ende der vertikal angeordneten Drehwelle (22) verbunden ist.

7. Verwendung des Plan- und Ausdrehkopfes nach Patentanspruch 1, in einer Werkzeugmaschine, wobei die Durchführung der Radialverschiebung des Werkzeuges (16) über einen Industrieroboter oder Manipulator erfolgt, der einem drehbares Verbindungselement aufweist und über eine NC-Einrichtung steuerbar ist.

8. Plan- und Ausdrehkopf, nach Patentanspruch 1, dadurch gekennzeichnet, dass die Antriebswelle (18) gegenüber der Längsachse der seitlichen Verlängerung (2a) geneigt angeordnet ist, wodurch dem Gehäuse (2, 2a) des Plan- und Ausdrehkopfes (1) im Querschnitt eine birnenförmig, sich verjüngende Gestalt verliehen ist.

9. Werkzeugmaschine, nach Patentanspruch 2, dadurch gekennzeichnet, dass das Abtriebselement (24, 25) in der Wand (6) der Werkzeugmaschine parallel zur Achse (X) der Spindel (4, 5) angeordnet ist, und dass diesem Abtriebselement (24, 25) eine Blockier- und Positioniereinrichtung in Form einer elektromagnetischen Bremse (31) zugeordnet ist.

10. Werkzeugmaschine nach Patentanspruch 2, dadurch gekennzeichnet, dass das Abtriebselement (24, 25) mit einem Gleichstrommotor (36) verbunden ist, dass diesem Gleichstrommotor (36) ein Tachogenerator (54) zugeordnet ist, dass das Abtriebselement (24, 25) mit einem Resolver oder Encoder (42) wirkverbunden ist und dass diese Gleichstrommotor (36), sowie der Tachogenerator (54), mit einer NC-Steuereinheit (48, 49) wirkverbunden sind.

11. Werkzeugmaschine, nach Patentanspruch 2, dadurch gekennzeichnet, dass das Abtriebselement (24, 25) mit einer drehbaren Gewindespindel (38) wirkverbunden ist, dass diese Gewindespindel (38) einer ein Innengewinde aufweisende Mutter (43) zugeordnet ist, die mit der Gewindespindel (38) wirkverbunden ist und dass diese Gewindemutter (43) einen elektrischen Endschalter (44) aufnimmt, der von einstellbaren Steuernocken (45), zur Festlegung der maximalen Verstellbewegung des Werkzeuges (16) betätigbar ist.

12. Werkzeugmaschine nach Patentanspruch 11, dadurch gekennzeichnet, dass der Endschalter (44) mit wenigstens einem Stecker (49), der mit der NC-Steuereinheit verbunden ist, in elektrischer Wirkverbindungsteht.

**Claims**

1. A facing and boring head comprising a head housing (2), a receiving cone (3) adapted to be connected to the spindle (5, 6) of a machine tool (6), an element (2a) which forms a part of the head housing and which is provided with a rotatably mounted shaft (22) disposed parallel to the axis (X) of said cone, said shaft being operatively connectable to a controllable adjustment device (24, 25, 47) of the machine tool for radial displacement of a tool (16), characterised in that the element (2a) forms a lateral extension of the head housing and the shaft (22) is so operatively connected to the tool via two bevel gears (20, 21), a drive shaft (18), a worm gear (19), and a known drive differential (8 - 12) that the drive for the radial displacement of the tool is effected independently of the spindle drive.

2. A machine tool, comprising a tool changer and a tool changing magazine to receive and drive the facing and boring head according to claim 1, wherein a drive element (24, 25) of the adjustment device (47) connectable to the free end (23) of a drive element (23, 26) of the facing and boring head (1) is mounted in the wall (6) receiving the spindle (4, 5).

3. A facing and boring head according to claim 1, characterised in that the drive shaft (18) is disposed horizontally in the lateral extension (2a) of the head housing (2) and said drive shaft (18) is operatively connected to the shaft (22) at its free end via the bevel gears (20, 21), shaft (22) being disposed in a holder (26) projecting from the head housing (2a).

4. A facing and boring head according to claim 3, characterised in that the shaft (22) is disposed vertically and has a coupling tongue (23) at its free end.

5. A facing and boring head according to claim 4, characterised in that the coupling tongue (23) is connectable to a corresponding groove (25) of a rotary sleeve (24) of the adjustment device via a positive connection.

6. A facing and boring head according to claim 5, characterised in that the end of the shaft (22) provided with the coupling tongue (23) is surrounded by a ring (26) disposed rigidly in respect of rotation and axially displaceable against the action of a spring means (27); said ring (26) has diametrically opposite projections (28) with which a transverse pin (29) is operatively connected in the position of rest of the facing and boring head (1), said transverse pin (29) being rigidly connected to the free end of the vertical rotational shaft (22).

7. Use of the facing and boring head according to claim 1 in a machine tool, the radial displacement of the tool (16) being effected via an industrial robot or manipulator having a rotatable connecting element and controllable via an NC device.

8. A facing and boring head according to claim 1, characterised in that the drive shaft (18) is disposed at an angle to the longitudinal axis of the lateral extension (2a) so that the housing (2, 2a) of the facing and boring head (1) has a pearshaped tapering configuration in cross-section.

9. A machine tool according to claim 2, characterised in that the drive element (24, 25) is disposed in the machine tool wall (6) in parallel relationship to the axis (X) of the spindle (4, 5) and said drive element (24, 25) has associated with it a locking and positioning device in the form of an electromagnetic brake (31).

10. A machine tool according to claim 2, characterised in that the drive element (24, 25) is connected to a d.c. motor (36); a tachogenerator (54) is associated with said d.c. motor (36); the drive element (24, 25) is operatively connected to a resolver or encoder (42); and said d.c. motor (36) and the tachogenerator (54) are operatively connected to an NC control unit (48, 49).

11. A machine tool according to claim 2, characterised in that the drive element (24, 25) is operatively connected to a rotatable screwthreaded spindle (38); said screwthreaded spindle (38) is associated with an internally screwthreaded nut (43) operatively connected to the said spindle (38); and said screwthreaded nut (43) receives an electrical limit switch (44) adapted to be actuated by an adjustable control cam (45) to limit the maximum adjustment movement of the tool (16).

12. A machine tool according to claim 11, characterised in that the limit switch (44) is connected to at least one plug (49) operatively connected to the NC control unit.

**Revendications**

1. Tête à surfacer et à aléser, comportant un boîtier de tête (2), un cône de réception (3) pouvant être relié à la broche (5, 6) d'une machine-outil (6), un élément (2a) constituant une section du boîtier de tête, qui comporte un arbre (22) monté de façon à pouvoir tourner, disposé parallèlement à l'axe (X) du cône de réception, qui peut être relié fonctionnellement à un dispositif de déplacement pouvant être commandé (24, 25, 47) de la machine-outil pour déplacer radialement un outil (16), caractérisée en ce que l'élément (2a) représente un prolongement latéral du boîtier de tête, et en ce que l'arbre (22) est en liaison fonctionnelle, par l'intermédiaire de deux roues coniques (20, 21), d'un arbre d'entraînement (18), d'une roue à denture hélicoïdale (19) et d'un différentiel de transmission (8 - 12), avec l'outil, de telle façon que l'entraînement pour le déplacement radial de l'outil a lieu indépendamment de l'entraînement de la broche.

2. Machine-outil comportant un dispositif de changement d'outil et un magasin de changement d'outil pour recevoir et pour entraîner la tête à surfacer et à aléser selon la revendication 1, un élément de sortie ou élément commandé du dispositif de déplacement (47) étant placé dans la paroi (6) qui reçoit la broche (4, 5), élément qui peut être relié à l'extrémité libre (23) d'un élément d'entraînement (23, 26) de la tête à surfacer et à aléser (1).

3. Tête à surfacer et à aléser selon la revendication 1, caractérisée en ce que, dans le prolongement latéral (2a) du boîtier de tête (2), l'arbre d'entraînement (18) est disposé horizontalement, et en ce que cet arbre d'entraînement (18) est en liaison fonctionnelle à son extrémité libre, par l'intermédiaire des roues coniques (20, 21), avec l'arbre (22), l'arbre (22) étant placé dans un logement (26) s'écartant du boîtier de tête (2a).

4. Tête à surfacer et à aléser selon la revendication 3, caractérisée en ce que l'arbre (22) est disposé verticalement et comporte une languette d'accouplement (23) à son extrémité libre.

5. Tête à surfacer et à aléser selon la revendication 4, caractérisée en ce que la clavette d'accouplement (23) peut être reliée par une liaison par concordance de forme à une rainure correspondante (25) d'une douille rotative (24) du dispositif de déplacement.

6. Tête à surfacer et à aléser selon la revendication 5, caractérisée en ce que l'extrémité de l'arbre (22) pourvue de la clavette d'accouplement (23) est entourée par un anneau (26) calé en rotation pouvant se déplacer en direction axiale contre l'action d'un organe élastique (27), en ce que cet anneau (26) comporte des saillies (28) diamétralement opposées, avec lesquelles, dans la position de repos de la tête à surfacer et à aléser (1), une tige transversale (29) est en liaison fonctionnelle, cette tige étant reliée rigidement à l'extrémité libre de l'arbre rotatif (22) disposé verticalement.

7. Utilisation de la tête à surfacer et à aléser selon la revendication 1, dans une machine-outil, le déplacement radial de l'outil (16) étant effectué au moyen d'un robot industriel ou d'un manipulateur qui comporte un élément de liaison rotatif, et peut être commandé au moyen d'un dispositif à commande numérique.

8. Tête à surfacer et à aléser selon la revendication 1, caractérisée en ce que l'arbre d'entraînement (18) est incliné par rapport à l'axe longitudinal du prolongement latéral (2a), ce qui donne au boîtier (2, 2a) de la tête à surfacer et aléser (1) une forme de section droite s'amincissant en forme de poire.

9. Machine-outil selon la revendication 2, caractérisée en ce que l'élément de sortie ou commandé (24, 25) est disposé dans la paroi (6) de la machine-outil parallèlement à l'axe (X) de la broche (4, 5), et en ce qu'il correspond à cet élément commandé (24, 25) un dispositif de blocage et de positionnement en forme de frein électromagnétique (31).

10. Machine-outil selon la revendication 2, caractérisée en ce que l'élément de sortie (24, 25) est relié à un moteur à courant continu (36), en ce qu'il correspond à ce moteur à courant continu (36) un générateur tachymétrique (54), en ce que l'élément de sortie (24, 25) est relié fonctionnellement à un résolveur ou à un encodeur (42) et en ce que ce moteur à courant continu (36), ainsi que le générateur tachymétrique (54), sont reliés fonctionnellement à une unité de commande numérique (48, 49).

11. Machine-outil selon la revendication 2, caractérisée en ce que l'élément commandé (24, 25) est relié fonctionnellement à une broche filetée rotative (38), en ce que cette broche filetée (38) correspond à un écrou (43) présentant un taraudage, qui est relié fonctionnellement à la broche filetée (38), et en ce que cet écrou taraudé (43) reçoit un interrupteur fin de course (44) qui peut être actionné par des cames de commande (45) réglables pour fixer la course de déplacement maximale de l'outil (16).

12. Machine-outil selon la revendication 11, caractérisée en ce que l'interrupteur fin de course (44) est relié électriquement fonctionnellement à au moins un connecteur (49) qui est relié à l'unité de commande numérique.

FIG.1

FIG. 2

0 054 838

FIG. 3

0 054 838

FIG. 4